(19) **Europäisches Patentamt**
**European Patent Office**
**Office européen des brevets**

(11) **EP 1 895 206 B1**

(12) **EUROPÄISCHE PATENTSCHRIFT**

(45) Veröffentlichungstag und Bekanntmachung des Hinweises auf die Patenterteilung:
**23.09.2009  Patentblatt 2009/39**

(51) Int Cl.:
*F16H 63/48* *(2006.01)*          *F16D 63/00* *(2006.01)*

(21) Anmeldenummer: **07013845.8**

(22) Anmeldetag: **14.07.2007**

(54) **Parksperre**

Parking lock

Frein de stationnement

(84) Benannte Vertragsstaaten:
**FR IT**

(30) Priorität: **01.09.2006  DE 102006042637**

(43) Veröffentlichungstag der Anmeldung:
**05.03.2008  Patentblatt 2008/10**

(73) Patentinhaber: **GETRAG Getriebe- und Zahnradfabrik**
**Hermann Hagenmeyer GmbH & Cie KG**
**74199 Untergruppenbach (DE)**

(72) Erfinder: **Kirchner, Markus**
**71732 Tamm (DE)**

(74) Vertreter: **Steil, Christian et al**
**Witte, Weller & Partner**
**Postfach 10 54 62**
**70047 Stuttgart (DE)**

(56) Entgegenhaltungen:
**EP-A- 1 103 744          DE-A1- 3 638 045**
**DE-A1-102004 021 981     JP-A- 4 085 153**
**US-A1- 2002 092 710**

**Beschreibung**

Die vorliegende Erfindung betrifft eine Sperrenanordnung zum Sperren der Beweglichkeit eines in einer ersten Richtung beweglich gelagerten ersten Gliedes mittels eines zweiten Gliedes, das in einer zweiten Richtung quer zu der ersten Richtung beweglich gelagert ist, insbesondere in Form einer Parksperrenanordnung für ein Fahrzeuggetriebe, wobei das erste Glied eine Zahnkontur mit wenigstens zwei Zähnen und einer dazwischen liegenden Zahnlücke aufweist, wobei die Zahnlücke in der ersten Richtung eine Zahnlückenlänge besitzt, wobei das zweite Glied eine Nase aufweist, die in der ersten Richtung eine Nasenlänge aufweist, die kleiner ist als die Zahnlückenlänge, wobei die Nase bei einer Bewegung in der zweiten Richtung in die Zahnlücke einführbar ist, um das erste Glied zu sperren, wobei die Zähne jeweils eine zu dem zweiten Glied hin weisende Fläche mit einer ersten Kontur aufweisen, und wobei die Nase eine zu dem ersten Glied hin weisende Fläche mit einer zweiten Kontur aufweist, wobei die erste Kontur und die zweite Kontur so aufeinander abgestimmt sind, dass die Nase von den Zähnen gegenüber einem Einführen in die Zahnlücke abgewiesen wird, wenn sich das erste Glied mit einer Geschwindigkeit bewegt, die größer ist als eine vorbestimmte Sperrengeschwindigkeit und kleiner ist als eine Maximalgeschwindigkeit des ersten Gliedes.

Eine derartige Sperrenanordnung ist bekannt aus dem Dokument DE 10 2004 021 981 A1.

In automatisierten Fahrzeuggetrieben werden beim Parken des Fahrzeugs sämtliche Gangstufen außer Eingriff geschaltet. Ein Wegrollen des Fahrzeugs unabhängig von dem Betätigen der Handbremse wird bei solchen Getrieben generell durch eine Parksperre erreicht. Die Parksperre weist in der Regel ein Parksperrenrad mit einer Verzahnung auf, das an einer Abtriebswelle des Fahrzeuggetriebes festgelegt ist. Ferner weist die Parksperre generell eine Klinke auf, die gehäusefest gelagert ist und manuell oder mittels eines Aktuators in die Verzahnung des Parksperrenrades einführbar ist, um die Abtriebswelle des Getriebes gegen eine Verdrehung (und damit gegen ein Wegrollen des Fahrzeugs) zu sperren.

Derartige Parksperren sind generell dazu ausgelegt, dass die Klinke auch bei einer geringen Relativdrehzahl einrasten kann. Hierdurch kann ein sicheres Auslösen der Parksperre auch dann gewährleistet werden, wenn die Parksperre zu einem Zeitpunkt betätigt wird, bei dem sich die Klinke und ein Zahn unmittelbar gegenüberliegen.

Die Parksperren sind andererseits so ausgelegt, dass die Klinke bei höheren Drehzahlen selbst bei aktiver Betätigung nicht das Parksperrenrad blockieren kann. Denn dies hätte möglicherweise eine sofortige Zerstörung der Parksperre bzw. des Fahrzeuggetriebes zur Folge.

Bei derartigen höheren Drehzahlen und einer beispielsweise versehentlichen Betätigung der Parksperre "ratscht" die Klinke über die Verzahnung. Dabei wird die Klinke aufgrund der gewählten Geometrien von der Verzahnung abgewiesen.

Problematisch ist hierbei, dass die involvierten Bauteile bei diesem "Ratschen" mechanisch stark beansprucht werden.

Aus der eingangs genannten DE 10 2004 021 981 A1 ist es bekannt, am Fuß der Sperrklinke eine Fase anzubringen. Hierdurch soll erreicht werden, dass das Abweisen der Sperrklinke bei größeren Fahrzeuggeschwindigkeiten (beispielsweise größer als 10 km pro Stunde) über die abgeflachte Fase des Fußes der Sperrklinke erfolgt. Hierdurch soll die Beanspruchung der involvierten Bauteile verringert werden.

Aus dem Dokument DE 199 43 519 A1 ist es ferner bekannt, eine Parksperre elektronisch abzusichern. Hierbei wird ein Stellglied zum Einlegen einer Parksperre nur in Abhängigkeit von bestimmten Parametern zugelassen, beispielsweise wenn die Fahrzeuggeschwindigkeit unterhalb eines bestimmten Grenzwertes liegt.

Das Dokument DE 103 10 977 A1 offenbart eine Parksperre, bei der an einem fest mit der Getriebeabtriebswelle verbundenen Zahnrad eine Parksperrenverzahnung an einer axialen Stirnseite des Zahnrades vorgesehen ist.

DE3638045 A1 offenbart eine Sperrenanordnung nach dem Oberbegriff des **Anspruchs 1,** bei der sowohl die erste Kontur (25) als auch die zweite Kontur (23) abgerundet sind (siehe Fing. 2,4 und Ansprüche 1,4).

JP04085153 A1 offenbart eine Sperrenanordnung nach dem Oberbegriff des **Anspruchs 1,** bei der die zweite Kontur (9b) abgerundet ist (siehe Fing. 6).

US2002/092710 A1 offenbart eine Sperrenordnung nach dem Oberbegriff des **Anspruchs 1**, bei der ebenfalls die zweite Kontur (19) abgerundet ist (siehe Fing. 1).

Vor dem obigen Hintergrund ist es die Aufgabe der Erfindung, eine verbesserte Sperrenanordnung anzugeben, bei der die Beanspruchung der involvierten Bauteile bei fehlerhaften Betätigungen der Sperrenanordnung verringert ist.

Diese Aufgabe wird bei der eingangs genannten Sperrenanordnung dadurch gelöst, dass die erste und/oder die zweite Kontur derart abgerundet ist, dass die Abrundung der ersten und/oder der zweiten Kontur einer logarithmischen Funktion oder einer Exponentialfunktion entspricht.

Durch die erfindungsgemäße Abrundung der ersten/und oder der zweiten Kontur kann erreicht werden, dass das Abweisen des zweiten Gliedes generell mit relativ geringen Impulsen erfolgt. Bei einer Bewegung des ersten Gliedes im Bereich der Maximalgeschwindigkeit (beispielsweise bei einer Parksperre: eine Rotation des Parksperrenrades bei Autobahngeschwindigkeit von z.B. 150 km/h) wird das zweite Glied aufgrund der abgerundeten Form weniger heftig (mit einem geringeren Impuls) zurückgestoßen. Dies führt selbst bei einer Fehlbetätigung der Sperrenanordnung bei Geschwindigkeiten im Bereich der Maximalgeschwindigkeit zu einer deutlichen Verringerung der Belastung der involvierten Bauteile. Insbesondere können Spitzenbeanspruchungen des ersten und des zweiten Gliedes verringert werden. Dadurch kann die Sperrenanordnung leichter, optimierter im Hinblick auf Kosten, Materialaufwendung und Bauerfordemissen konstruiert und realisiert werden. Beispielsweise kann das erste und/oder das zweite Glied als Stanzteil ausgebildet werden, da ein Stanzprozess aufgrund verringerter Dicke realisierbar ist.

Es hat sich gezeigt, dass eine logarithmische Funktion oder eine Exponentialfunktion den Erfordernissen einer möglichst geringen Impulsgröße über einen möglichst großen Geschwindigkeitsbereich am weitesten entgegenkommt.

Es hat sich gezeigt, dass die Verwendung eines natürlichen Logarithmus im Hinblick auf die Verringerung der Impulsgröße über einen großen Geschwindigkeitsbereich noch optimalere Ergebnisse ermöglicht als beispielsweise ein Logarithmus zur Basis 10 oder zur Basis 2, obgleich auch derartige Funktionen generell eine Verbesserung gegenüber Konturen mit Fase versprechen.

Von besonderem Vorteil ist es, wenn die Abrundung einem Abschnitt folgender Funktion entspricht:

$$\overline{y} = K1 \bullet \text{Logarithmus} \, (\overline{x} + K2),$$

wobei die $\overline{x}$-Richtung der ersten Richtung entspricht und wobei die $\overline{y}$-Richtung der zweiten Richtung entspricht und wobei K1 und K2 Konstanten sind, die im Wesentlichen von geometrischen Größen der Parksperrenanordung abhängen.

Der Abschnitt der Funktion, der zur Bildung der Kontur(en) verwendet wird, lässt sich beispielsweise durch eine Koordinatentransformation bestimmen.

Die hier gemeinten geometrischen Größen können insbesondere die Länge der Zahnlücken des ersten Gliedes in der ersten Richtung, die Länge der Nase des zweiten Gliedes in der ersten Richtung, das Lückenspiel zwischen der Nase und der Zahnlücke im Eingriffszustand, etc. sein.

Von besonderem Vorteil ist es, wenn die Konstante K1 auch von einem mittleren Einflugwinkel abhängig ist, der bei sich bewegendem ersten Glied zwischen der ersten und der zweiten Kontur eingerichtet wird, wenn diese aufeinander treffen.

Ein solcher mittlerer Eingriffswinkel kann beispielsweise bei typischen Parksperrensystemen für Kraftfahrzeuge im Bereich von 1 Grad bis 5 Grad liegen, vorzugsweise im Bereich von 2 Grad bis 2,5 Grad.

Ein zweiter Faktor der Konstante K2 kann dabei wiederum von geometrischen Größen der Parksperrenanordnung abhängen, wie beispielsweise oben erwähnt.

Insbesondere ist es von Vorteil, wenn die Konstante K1 einen Faktor beinhaltet, der durch den Tangenswert des mittleren Einzugswinkels gebildet ist.

Es hat sich gezeigt, dass die Berücksichtigung des mittleren Einzugswinkels über die Tangensfunktion dazu beiträgt, dass die Größe der abweisenden Impulse über im Wesentlichen den Gesamtgeschwindigkeitsbereich von der Sperrengeschwindigkeit bis hin zur Maximalgeschwindigkeit verringert werden kann.

Gemäß einer weiteren insgesamt bevorzugten Ausführungsform ist nur die erste Kontur oder nur die zweite Kontur gemäß einer logarithmischen Funktion abgerundet, wobei die andere Kontur in Bewegungsrichtung verläuft.

Beispielsweise kann die erfindungsgemäße Abrundung ausschließlich an der Kontur des zweiten Gliedes (Sperrklinkennase) ausgebildet sein, wohingegen das andere Glied in Bewegungsrichtung konturiert ist (bei einem Parksperrenrad also einer Kreisform folgend konturiert ist).

Insgesamt ist es ferner bevorzugt, wenn die Nase bei Geschwindigkeiten des ersten Gliedes über den gesamten Bereich von der Sperrengeschwindigkeit bis hin zur Maximalgeschwindigkeit mit im Wesentlichen gleicher Impulsgröße (Impulskonstanz) abgewiesen wird.

Dies ermöglicht es, dass bei keiner Geschwindigkeit innerhalb dieses Bereiches eine Spitzenbelastung der involvierten Bauteile auftritt. Daher kann für sämtliche Gefährdungssituationen eine geringe Belastung der involvierten Bauteile erreicht werden.

Obgleich es bevorzugt ist, dass die erfindungsgemäße Konturierung an der Nase des zweiten Gliedes (Parksperrenklinke) erfolgt, ist es natürlich auch möglich, eine solche Konturierung an dem ersten Glied, d.h. an den Zähnen des ersten Gliedes, auszubilden (d.h. in der Regel an dem Parksperrenrad).

Der Grundgedanke der Impulskonstanz ist auch deswegen von besonderer Bedeutung, weil bei einem Ausfall des Fahrzeuggetriebes und gleichzeitig einer Fehlbetätigung der Parksperre das Fahrzeug aus der Momentangeschwindigkeit bis hin zum Stillstand abgebremst wird bzw. ausrollt. Daher ist es von besonderer Bedeutung, dass über den gesamten Geschwindigkeitsbereich keine Spitzenbelastungen an den involvierten Bauteilen auftreten.

Gegenüber geraden Konturen an den Flächen des ersten bzw. des zweiten Gliedes kann eine Verringerung der Beanspruchung um 70 % (d.h. Verringerung der Belastung auf ca. 30 %) erzielt werden.

Ausführungsbeispiele der Erfindung sind in der Zeichnung dargestellt und werden in der nachfolgenden Beschreibung näher erläutert. Es zeigen:

Figur 1    eine Darstellung eines Ausschnittes aus einem Fahrzeuggetriebe mit einer erfindungsgemäßen Parksperrenanordnung;

Figur 2    eine Parksperrenanordnung gemäß einer weiteren Ausführungsform der vorliegenden Erfindung;

Figur 3    eine Darstellung eines Details III der Figur 2;

Figur 4    eine Darstellung von logarithmischen Funktionen zur Verwendung bei der Konturierung von Flächen von erfindungsgemäßen Sperrenanordnungen;und

Figur 5    ein Beispiel einer Kontur einer Parksperrennase einer erfindungsgemäßen Sperrenanordnung.

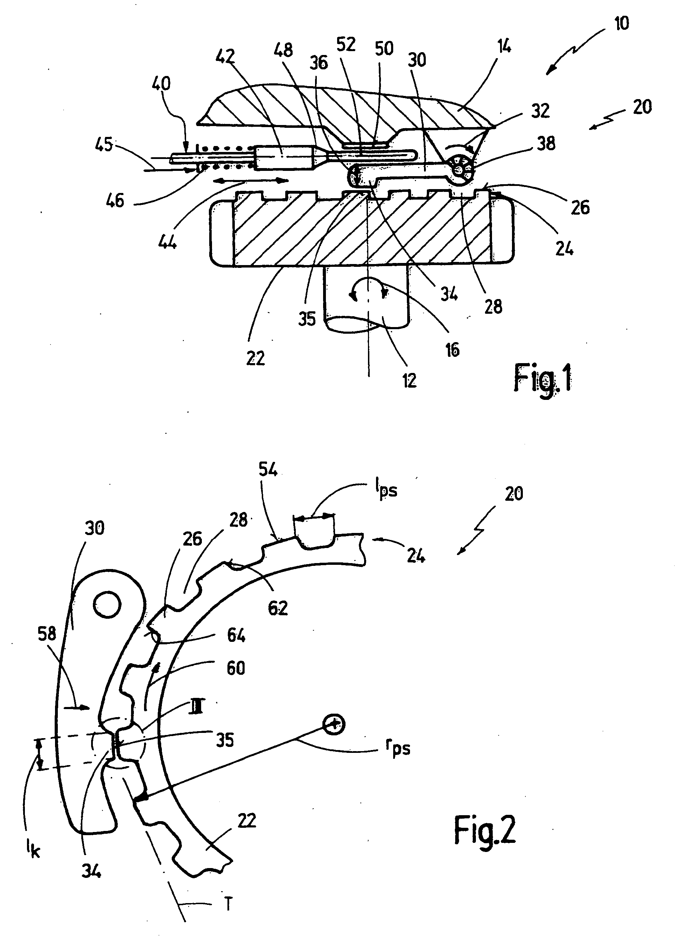

In Figur 1 ist ein Ausschnitt aus einem Fahrzeuggetriebe 10 dargestellt, das eine Abtriebswelle 12 und ein Gehäuse 14 aufweist. Die Abtriebswelle 12 ist in zwei Richtungen 16 drehbar und ist starr mit Antriebsrädern des Fahrzeugs gekoppelt, das mit dem Getriebe 10 ausgestattet ist.

Das Getriebe 10 weist ferner eine Parksperrenanordnung 20 auf, die erfindungsgemäß ausgestaltet ist.

Die Parksperrenanordnung 20 weist ein Parksperrenrad 22 auf, das drehfest mit der Abtriebswelle 12 des Getriebes 10 verbunden ist. Im vorliegenden Fall ist das Parksperrenrad 22 ein fest mit der Abtriebswelle 12 verbundenes Zahnrad zur Übertragung von Antriebsmoment auf die Abtriebswelle und ist an einer axialen Stirnseite mit einer Zahnkontur 24 ausgebildet.

Die Zahnkontur 24 erstreckt sich beispielsweise um die Achse der Getriebewelle 12 herum und weist axial vorstehende Zähne 26 und axial zurücktretende Zahnlücken 28 auf, wie es in Figur 1 schematisch dargestellt ist.

Die Parksperrenanordnung 20 weist ferner eine Parksperrenklinke 30 auf, die drehbar an dem Gehäuse 14 gelagert ist, wie in Figur 1 durch einen Pfeil 32 dargestellt ist.

Die Parksperrenklinke 30 weist an ihrem freien Ende eine Nase 34 auf, die zum Eingriff in eine jeweilige Zahnlücke 28 der Zahnkontur 24 ausgebildet ist.

Eine zu der Zahnkontur 24 hin weisende Fläche der Nase 34 ist mit einer erfindungsgemäßen abgerundeten Nasenkontur 35 versehen.

Generell ist die Nase 34 bei Verschwenkbewegungen der Parksperrenklinke 30 in einer Bewegungsrichtung 36 bewegbar, die senkrecht zu der Bewegungsrichtung 16 des Parksperrenrades 22 ausgerichtet ist.

In Figur 1 ist ferner im Bereich der Lagerung der Parksperrenklinke 30 an dem Gehäuse 14 eine Feder 38 dargestellt, die die Parksperrenklinke 30 in Richtung von dem Parksperrenrad 22 weg vorspannt. Hierdurch wird verhindert, dass die Parksperrenklinke 30 im unbetätigten Zustand mit der Zahnkontur 24 in Eingriff gelangt.

Zur Betätigung der Parksperrenanordnung 20 ist ferner ein Parksperrenaktuator 40 vorgesehen, der einen Sperrschieber 42 aufweist. Der Sperrschieber 42 ist in einer Richtung 44 bewegbar, die etwa tangential zu der Drehrichtung 16 des Parksperrenrades 22 verläuft.

Der Sperrschieber wird mittels einer Aktuatorkraft in Richtung auf die Parksperrenklinke 30 zu bewegt, wie es durch einen Pfeil 45 angedeutet ist. Dabei wirkt die Kraft 45 zunächst auf eine Haltefeder 46, die die Betätigungsenergie speichert, für den Fall, dass die Nase 34 zum Zeitpunkt der Betätigung unmittelbar einem Zahn 26 gegenüberliegt.

Sobald die Nase 34 über einer Zahnlücke 28 angeordnet ist, drückt ein an dem Sperrschieber 42 vorgesehener Konusabschnitt 48 die Parksperrenklinke 30 auf das Parksperrenrad 22 zu und in die entsprechende Zahnlücke 28 hinein. Dabei kann sich der Sperrschieber 42 an einem Widerlager 50 an dem Gehäuse 14 abstützen, wenn dies konstruktiv vorteilhaft ist, wie im dargestellten Fall.

Demzufolge wird das Parksperrenrad 22 in den Bewegungsrichtungen 16 gesperrt. Ein Fahrzeug, das mit einem Fahrzeuggetriebe mit einer solchen Parksperre ausgerüstet ist, kann demzufolge in der Parkstellung nicht versehentlich wegrollen.

Sofern die Parksperre wieder gelöst werden soll, wird der Sperrschieber 42 zurückgezogen, so dass die Feder 38 die Nase 34 aus der Zahnlücke 28 herausdrücken kann.

Bei geringen Relativgeschwindigkeiten zwischen Parksperrenklinke 30 und der Zahnkontur 24 (entsprechend beispielsweise Geschwindigkeiten des Fahrzeugs von 2 bis 5 km pro Stunde) kann ein Eingriff der Parksperrenanordnung 20 möglich sein. Oberhalb solcher Geschwindigkeitsbereiche ist ein Eingriff der Parksperrenanordnung jedoch auf jeden Fall zu vermeiden, da dies zu erheblichen Beschädigungen der Parksperrenanordnung 20 und/oder des gesamten Fahrzeuggetriebes 10 führen kann.

Dies wird zum einen dadurch erreicht, dass ab einer solchen Grenz- bzw. Sperrengeschwindigkeit sich die Zahnlücken so schnell an der Sperrklinke vorbei bewegen, dass diese jedenfalls nicht vollständig in die Zahnlücken eingreifen kann. Vielmehr wird die Parksperrenklinke immer wieder von den Zähnen des Parksperrenrades 22 abgewiesen. Dabei kann dies mit einem erheblichen Impuls erfolgen, wenn die Nase 34 bereits etwas in eine Zahnlücke eingedrungen ist, so dass eine Flanke der Nase 34 auf eine - in der Regel abgerundete - Flanke bzw. Kante eines Zahns 26 auftrifft. Generell wird dieser Zustand als "Ratschen" bezeichnet.

Bei der erfindungsgemäßen Parksperrenanordnung, die in Figur 1 gezeigt ist, ist die Nasenkontur 35 so abgerundet ausgebildet, dass die Nase bei Geschwindigkeiten des Parksperrenrades 22 über den gesamten Bereich von der Sperrengeschwindigkeit bis hin zur Maximalgeschwindigkeit mit geringer Impulsgröße abgewiesen wird, insbesondere mit annähernd konstanter Größe abgewiesen wird.

Unabhängig von der Geschwindigkeit, bei der eine Fehlfunktion auftritt und die Parksperrenanordnung 20 zum Eingriff angesteuert wird, kann das Abweisen der Parksperrenklinke 30 mit einer relativ geringen Impulsgröße erfolgen, so dass die Belastung der involvierten Bauelemente (Parksperrenklinke 30, Parksperrenrad 22, Parksperrenaktuator 40, etc.) verringert werden kann.

In der Parksperrenanordnung 20 der Figur 1. sind die der Nasenkontur 35 gegenüberliegenden Konturen der Zähne 26 jeweils gerade ausgebildet. Es ist jedoch denkbar, auch diese Konturen abgerundet auszubilden, um das erfindungsgemäße Ziel zu erreichen.

Die Abrundung der Nasenkontur 35 folgt im Wesentlichen einer logarithmischen Kurve, wobei der Abstand zwischen den einander gegenüberliegenden Konturen der Nase 34 bzw. der Zähne 26 im Bereich einer hinteren Zahnflanke größer ist als im Bereich einer vorderen Zahnflanke. Die vordere Zahnflanke ist dabei jene, die bei der üblichen Bewegungsrichtung 16 des Parksperrenrades 22 (dies ist gewöhnlich die Richtung bei Vorwärtsfahrt des Fahrzeugs) vorne liegt.

Generell erfolgt die Abrundung der Nasenkontur 35 (und ggf. der Kontur der Zähne 26) jeweils in Bewegungsrichtung 16 asymmetrisch. Mit anderen Worten soll ein Abweisen der Parksperrenklinke 30 insbesondere bei Vorwärtsfahrt erzielt werden. Bei Rückfahrtsfahrt werden ohnehin keine hohen Geschwindigkeiten erzielt, so dass eine diesbezügliche Optimierung in der Regel nicht von hoher Priorität ist.

Figur 2 zeigt eine alternative Ausführungsform einer erfindungsgemäßen Parksperrenanordnung für ein Kraftfahrzeuggetriebe.

Die Parksperrenanordnung 20 der Figur 2 entspricht hinsichtlich Konstruktion und Funktionsweise generell der Parksperrenanordnung 20 der Figur 1. Im Folgenden werden lediglich Unterschiede erläutert.

Zum einen ist bei dem Parksperrenrad 22 die Zahnkontur 24 am Außenumfang ausgebildet. In entsprechender Weise ist die Parksperrenklinke 30 um eine Achse verschwenkbar, die parallel zur Drehachse des Parksperrenrades 22 verläuft.

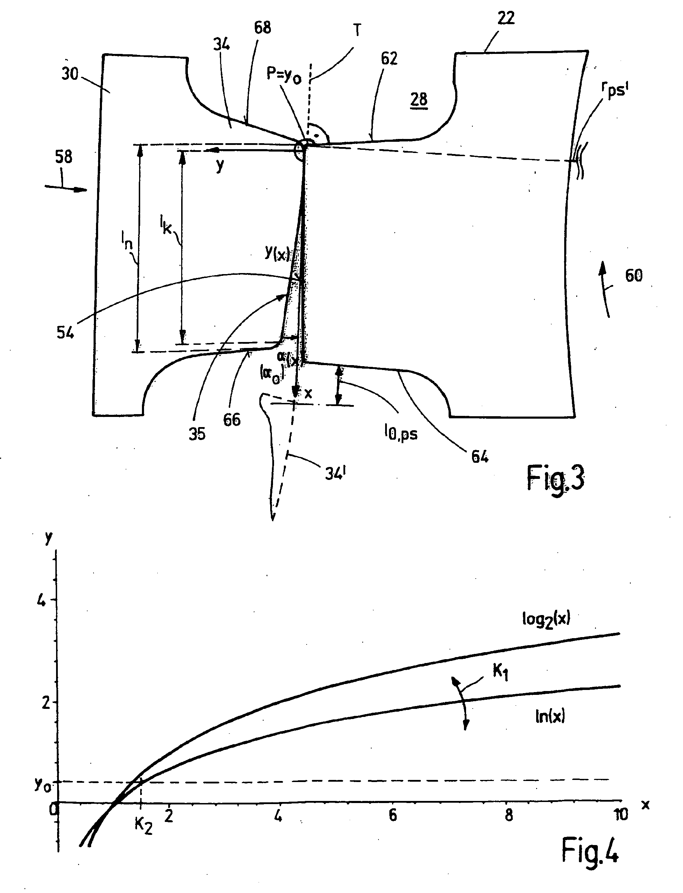

Figur 3 zeigt eine Ansicht des Details III von Figur 2.

Eine zu der Parksperrenklinke hin weisende Fläche der jeweiligen Zähne 26 ist in Figur 2 und 3 generell mit 54 bezeichnet. Die Bewegungsrichtung der Parksperrenklinke 30 in Sperrrichtung ist in Figur 2 und 3 mit 58 bezeichnet (diese Richtung entspricht der Richtung 36 in Figur 1). Ferner ist die Bewegungsrichtung des Parksperrenrades 22 bei Vorwärtsfahrt mit 60 bezeichnet (entsprechend der Drehrichtung 16 bei Vorwärtsfahrt).

Generell sind in Vorwärtsfahrtrichtung 60 jeweils vorne liegende Flanken der Zähne 26 mit 62 bezeichnet, und nachfolgende Flanken jeweils mit 64. In entsprechender Weise ist eine vordere Flanke der Nase 34 der Parksperrenklinke 30 mit 66 bezeichnet und eine hintere Nasenflanke mit 68.

Die obigen Bezeichnungen sind so gewählt, dass sich bei Bewegung des Parksperrenrades 22 in Vorwärtsrichtung 60 die jeweiligen vorderen Zahnflanken 62 der Zähne 26 der vorderen Nasenflanke 66 nähern und die hintere Zahnflanke 64 sich nach Vorbeilaufen an der Nase 34 von der hinteren Nasenflanke 68 entfernt.

In Figur 2 und 3 sind ferner einige typische geometrische Abmessungen der Parksperrenanordnung 20 gezeigt, und zwar folgendermaßen:

| | |
|---|---|
| $l_{PS}$ | Länge einer Zahnlücke 28 in Bewegungsrichtung 60 |
| $r_{PS}$ | Außenradius des Parksperrenrades 22 |
| $l_K$ | Länge der Nase 34 in Bewegungsrichtung 60 (ohne Verrundungsradien) |
| $l_n$ | Länge der Nase 34 in Bewegungsrichtung 60 (mit Verrundungsradien) |
| $T$ | Tangente des Außenradius $r_{PS}$ ausgehend vom Berührungspunkt P des Parksperrenrades 22 mit der Nase 34 |
| $l_{0,PS}$ | Zahnflankenspiel zwischen Nase 34 und Zahnflanke ($l_{0,P} = l_{PS-ln}$) |
| $P$ | jener Berührungspunkt (genauer Berührungslinie) zwischen der Nasenkontur 35 und der gegenüberliegenden Zahnkontur 54, der nahest möglich zur vorderen Zahnflanke 62 bzw. zur hinteren Nasenflanke 68 liegt; dieser Punkt bildet vorzugsweise den Nullpunkt des Abschnittes der Abrundungsfunktion (vorzugsweise logarithmische Funktionen), die zur Bildung der Nasenkontur 35 verwendet wird. |
| $\alpha$ | Winkel zwischen Tangente T und Nasenkontur 35 ausgehend vom jeweiligen Berührpunkt P |
| $\alpha_0$ | Mittlerer Einflugwinkel |
| $x$ | Koordinatenachse zur Beschreibung der Nasenkontur 35, fällt mit Tangente T zusammen |
| $y$ | Koordinatenachse zur Beschreibung der Nasenkontur 35, senkrecht zur Achse x und ausgehend vom Berührungspunkt P in Richtung weg von dem Parksperrenrad 22 |

Die Nasenkontur 35 ist erfindungsgemäß so abgerundet, dass die Nase 34 bei Geschwindigkeiten des Parksperrenrades 22 über den Gesamtbereich von der Sperrengeschwindigkeit (ca. 2 bis 5 km pro Stunde) bis hin zur Maximalgeschwindigkeit (z.B. 150 km pro Stunde oder deutlich mehr) mit im Wesentlichen gleicher Impulsgröße abgewiesen wird.

Dabei ist die Nasenkontur 35 ausgehend von der hinteren Nasenflanke 68 so ausgebildet, dass die Kontur sich von der Tangente T bzw. von der Zahnkontur 54 immer weiter entfernt. Grundsätzlich wird die erfindungsgemäße Art der Abweisung der Parksperrenklinke 30 bereits dann erreicht, wenn die Nasenkontur 35 nicht plan oder polygon ausgebildet ist, sondern als kontinuierlich abgerundete Fläche, die sich ausgehend von der hinteren Nasenflanke 68 zur vorderen Nasenflanke 66 immer mehr von dem Außenumfangskreis des Parksperrenrades 22 entfernt.

Von besonderem Vorzug ist es, wenn diese Nasenkontur 35 der Form einer logarithmischen Funktion folgt, wie es beispielsweise in Figur 3 dargestellt ist.

Generell folgt die Nasenkontur 35 bei der Ausführungsform der Figur 2 und 3 einer Funktion $\bar{y}(\bar{x})$ = K1 • Logarithmus ($\bar{x}$ + K2), wobei K1 und K2 Konstanten sind, die im Wesentlichen von geometrischen Größen der Parksperrenanordnung 20 abhängen, wie beispielsweise der Zahnlückenlänge $l_{PS}$ der Nasenlänge $l_K$, dem Zahnflankenspiel $l_{0,PS}$. Ferner kann die Konstante K1 auch von dem mittleren Einflugwinkel $\alpha_0$ abhängig sein, beispielsweise dadurch, dass die Funktion Tangens $\alpha_0$ einen Faktor der Konstanten K1 bildet (z.B. K1 = K1* • tan ($\alpha_0$)).

Der Winkel $\alpha$ hängt davon ab, wie der Berührungspunkt auf der Nasenflanke 35 liegt, also im Wesentlichen von der Relativposition zwischen Nase 34 und Zahn 26. Der mittlere Einflugwinkel $\alpha_0$ stellt eine geometrische Vereinfachung dar. Genauer gesagt entspricht der mittlere Einflugwinkel $\alpha_0$ jenem Winkel, wenn die Nase 34 anstelle einer erfindungsgemäß abgerundeten Kontur eine plane Fase am Fuß der Parksperrenklinke 30 aufweist.

Bei der Ausführungsform der Figuren 2 und 3 ist der Logarithmus ein natürlicher Logarithmus ($l_n$).

Generell ist es erfindungsgemäß möglich, dass die Nase 34 bei Geschwindigkeiten des Parksperrenrades 22 über den gesamten Bereich von der Sperrengeschwindigkeit bis hin zur Maximalgeschwindigkeit mit im Wesentlichen gleicher Impulsgröße abgewiesen wird, wobei diese Impulsgröße relativ gering ist.

Belastungen der involvierten Bauteile bei Fehlbetätigung der Parksperrenanordnung 20 werden dadurch über den gesamten Geschwindigkeitsbereich vermieden.

Figur 4 zeigt in einem x-y-Diagramm die Kurven y = $l_n$ (x) und x = $\log_2$ (x).

Beide logarithmische Funktionen (oder auch andere logarithmische Funktionen mit anderer Basis) eignen sich zur Realisierung der Nasenkontur 35.

In Figur 4 ist ferner schematisch angedeutet, welchen Einfluss die Konstanten K1 und K2 auf die Nasenkontur 35 haben können.

Man erkennt, dass die Konstante K1 im Wesentlichen die Steigung der logarithmischen Kurve bestimmt. Die Konstante K2 bestimmt im Wesentlichen den Beginn der Kurve für die Nasenkontur 35 ausgehend von dem Berührungspunkt P.

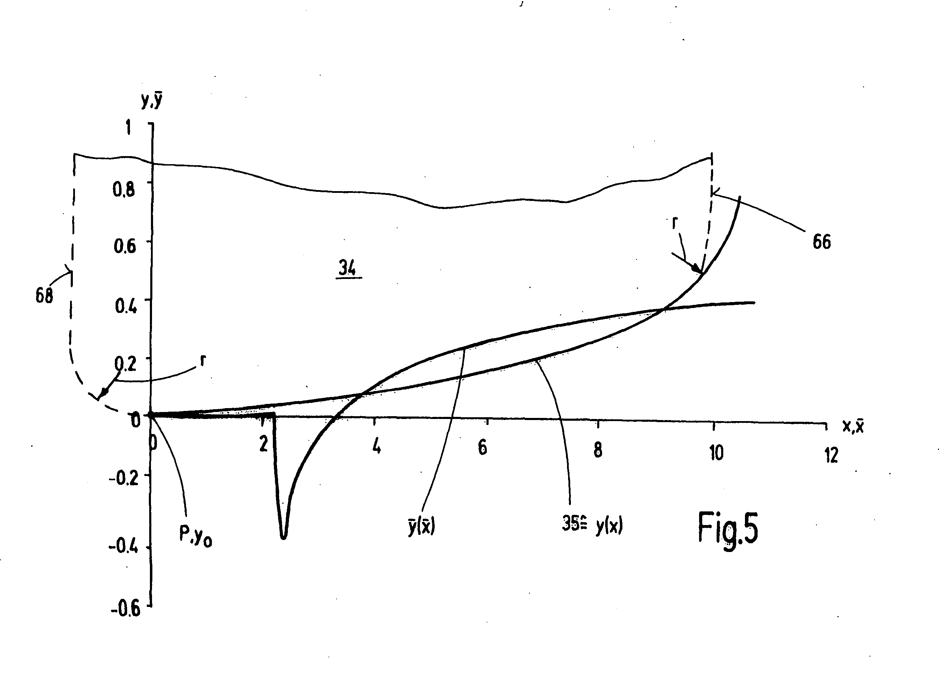

Figur 5 zeigt ferner in etwas genauerer Darstellung die Nase 34 mit der erfindungsgemäßen Nasenkontur 35.

Man erkennt, dass die Nasenkontur 35 ausgehend von einem Ursprung $y_0$ = P (entsprechend Fig. 3) eine "umgekehrt" logarithmische Funktion bildet. Man erkennt ferner, dass die Nasenkontur 35 in die jeweiligen Flanken 66, 68 übergeht, in beiden Fällen über einen Radius r von beispielsweise 1 mm.

Die Nasenkontur 35 stellt einen Abschnitt einer logarithmischen Funktion nach einer Koordinatentransformation dar. Die der Nasenkontur 35 zugrunde liegende Funktion ist, wie bereits oben erwähnt,

$$\bar{y} = K1 \bullet \text{Logarithmus } (\bar{x} + K2).$$

Diese Funktion $\bar{y}(\bar{x})$ ist in Fig. 5 ebenfalls dargestellt. Die Nasenkontur 35 lässt sich durch folgende Koordinatentransformation aus der Funktion $\bar{y}(\bar{x})$ erhalten:

$$y(x) = \bar{y}(\bar{x} = l_{PS}) - \bar{y}, \text{ mit } \bar{y} > l_{0,PS}$$

und

$$x = l_{PS} - \bar{x}, \text{ mit } \bar{x} > l_{0,PS}.$$

Allgemein ist anzumerken, dass das Abweisen der Parksperrenklinke 30 vom Parksperrenrad 22 beim Ratschen dadurch funktioniert, dass die Berührflächen bzw. Berührlinien, an denen sich die Bauelemente berühren, nicht senkrecht auf einander stehen, vorzugsweise nahezu parallel zur Tangentialrichtung T der Bewegungsrichtung 60 sind. Durch die gekrümmte Nasenkontur 35 variiert der Winkel zwischen der Tangentialrichtung T und der Berührflächennormalenrichtung je nach Auftreffen bzw. je nach Fahrzeuggeschwindigkeit. Durch die erfindungsgemäße Ausbildung der Nasenkontur 35 kann erreicht werden, dass über die wichtigen Geschwindigkeitsbereiche immer eine Abweisung der Parksperrenklinke 30 mit relativ geringer Impulsgröße erfolgt, so dass die Belastung der Bauteile insgesamt verringert wird, sofern ein solcher Fehler auftritt.

Die erfindungsgemäße Parksperrenanordnung 20 lässt sich bei automatisierten Schaltgetrieben, bei Doppelkupplungsgetrieben, aber natürlich auch bei herkömmlichen Wandlerautomatikgetrieben verwenden. Generell ist die Verwendung auch bei manuellen Schaltgetrieben möglich.

Obgleich die Verwendung der erfindungsgemäßen Parksperrenanordnung auch dann Sinn machen würde, wenn die Betätigung der Parksperrenanordnung 20 manuell erfolgt, so ist die erfindungsgemäße Ausbildung dieser Parksperrenanordnung von besonderer Bedeutung, wenn diese automatisiert betätigt wird.

**Patentansprüche**

**1.** Sperrenanordnung (20) zum Sperren der Beweglichkeit eines in einer ersten Richtung (60) beweglich gelagerten ersten Gliedes (22) mittels eines zweiten Gliedes (30), das in einer zweiten Richtung (58) quer zu der ersten Richtung (60) beweglich gelagert ist, insbesondere in Form einer Parksperrenanordnung (20) für ein Fahrzeuggetriebe (10), wobei das erste Glied (22) eine Zahnkontur (24) mit wenigstens zwei Zähnen (26) und einer dazwischen liegenden Zahnlücke (28) aufweist, wobei die Zahnlücke (28) in der ersten Richtung (60) eine Zahnlückenlänge ($I_{PS}$) besitzt, wobei das zweite Glied (30) eine Nase (34) aufweist, die in der ersten Richtung (60) eine Nasenlänge ($I_K$) aufweist, die kleiner ist als die Zahnlückenlänge ($I_{PS}$), wobei die Nase (34) bei einer Bewegung in der zweiten Richtung (58) in die Zahnlücke (28) einführbar ist, um das erste Glied (22) zu sperren, wobei die Zähne (26) jeweils eine zu dem zweiten Glied (30) hin weisende Fläche mit einer ersten Kontur (54) aufweisen und wobei die Nase (35) eine zu dem ersten Glied (22) hin weisende Fläche mit einer zweiten Kontur (35) aufweist, wobei die erste und die zweite Kontur (54, 35) so aufeinander abgestimmt sind, dass die Nase (34) von den Zähnen (26) gegenüber einem Einführen in die Zahnlücke (28) abgewiesen wird, wenn sich das erste Glied (22) mit einer Geschwindigkeit bewegt, die größer ist als eine vorbestimmte Sperrengeschwindigkeit und kleiner ist als eine Maximalgeschwindigkeit des ersten Gliedes (22),

**dadurch gekennzeichnet, dass**

die erste und/oder die zweite Kontur (54, 35) derart abgerundet ist, dass die Abrundung der ersten und/oder der zweiten Kontur (54, 35) einer logarithmischen Funktion oder einer Exponentialfunktion entspricht.

**2.** Sperrenanordnung nach Anspruch 1, **dadurch gekennzeichnet, dass** die Abrundung der ersten und/oder der zweiten Kontur (54, 35) der Funktion eines natürlichen Logarithmus entspricht.

**3.** Sperrenanordnung nach einem der Ansprüche 1 bis 2, **dadurch gekennzeichnet, dass** nur die erste Kontur oder die zweite Kontur gemäß einer logarithmischen Funktion abgerundet ist, wobei die andere Kontur in Drehrichtung (16) des Parksperrenrades (22) verläuft.

## Claims

**1.** A locking arrangement (20) for locking the mobility of a first element (22) which is movably mounted in a first direction (60), by means of a second element (30) which is movably mounted in a second direction (58) transversely with respect to the first direction (60), in particular in the form of a parking lock arrangement (20) for a vehicle transmission (10), wherein the first element (22) has a toothed contour (24) with at least two teeth (26) and a tooth gap (28) which lies between them, wherein the tooth gap (28) has a tooth gap length ($I_{PS}$) in the first direction (60), wherein the second element (30) has a projection (34) which has, in the first direction (60), a projection length ($I_K$) which is shorter than the tooth gap length ($I_{PS}$), wherein the projection (34) can be introduced into the tooth gap (28) when there is a movement in the second direction (58), in order to lock the first element (22), wherein the teeth (26) each have a face which points towards the second element (30) and has a first contour (54), and wherein the projection (34) has a face which points towards the first element (22) and has a second contour (35), wherein the first and second contours (54, 35) are matched to one another in such a way that the projection (34) is deflected by the teeth (26) from becoming inserted into the tooth gap (28) if the first element (22) moves at a speed which is higher than a predetermined locking speed and lower than a maximum speed of the first element (22),

**characterized in that**

the first and/or second contours (54, 35) are rounded in such a way that the rounding of the first and/or second contours (54, 35) corresponds to a logarithmic function or to an exponential function.

**2.** The locking arrangement as claimed in claim 1, **characterized in that** the rounding of the first and/or second contours (54, 35) corresponds to the function of a natural logarithm.

**3.** The locking arrangement as claimed in one of claims 1 to 2, **characterized in that** only the first contour or the second contour is rounded in accordance with a logarithmic function, wherein the other contour extends in the direction of movement.

## Revendications

**1.** Mécanisme de verrouillage de stationnement (20) pour bloquer la faculté de déplacement d'un premier élément (22), monté à déplacement dans une première direction (60), au moyen d'un deuxième élément (30) qui est monté à déplacement dans une deuxième direction (58) perpendiculaire à la première direction (60), en particulier sous la forme d'un mécanisme de verrouillage de stationnement (20) pour une transmission de véhicule (10), sachant que le premier élément (22) présente un contour denté (24) avec au moins deux dents (26) et un entredent (28) entre celles-ci, sachant que l'entredent (28) possède une longueur d'entredent ($I_{PS}$) dans la première direction (60), sachant que le deuxième élément (30) présente un mentonnet (34) qui présente dans la première direction (60) une longueur de mentonnet

($l_K$) qui est inférieure à la longueur d'entredent ($l_{PS}$), sachant que le mentonnet (34) peut être introduit dans l'entredent (28) lors d'un déplacement dans la deuxième direction (58), afin de bloquer le premier élément (22), sachant que les dents (26) présentent chacune une face tournée vers le deuxième élément (30) ayant un premier contour (54), et sachant que le mentonnet (34) présente une face tournée vers le premier élément (22) ayant un deuxième contour (35), sachant que le premier et le deuxième contours (54, 35) sont mutuellement adaptés de telle sorte que le mentonnet (34) est empêché par les dents (26) de pénétrer dans l'entredent (28) lorsque le premier élément (22) se déplace à une vitesse qui est supérieure à une vitesse de verrouillage ou de blocage prédéfinie et inférieure à une vitesse maximale du premier élément (22),
**caractérisé en ce que** le premier et/ou le deuxième contours (54, 35) sont arrondis de telle sorte que l'arrondi du premier et/ou du deuxième contours (54, 35) correspond à une fonction logarithmique et/ou à une fonction exponentielle.

2. Mécanisme de verrouillage de stationnement selon la revendication 1,
**caractérisé en ce que** l'arrondi du premier et/ou du deuxième contours (54, 35) correspond à la fonction d'un logarithme naturel.

3. Mécanisme de verrouillage de stationnement selon la revendication 1 ou 2, **caractérisé en ce que** seul le premier contour ou le deuxième contour est arrondi selon une fonction logarithmique, sachant que l'autre contour s'étend dans la direction de rotation (16) de la roue dentée (22) de verrouillage de stationnement.

Fig.1

Fig.2

Fig.3

Fig.4

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004021981 A1
- DE 19943519 A1
- DE 10310977 A1
- DE 3638045 A1
- JP 04085153 A
- US 2002092710 A1